(19) Europäisches Patentamt
European Patent Office
Office européen des brevets

(11) Veröffentlichungsnummer: **0 362 636 A2**

# (12) EUROPÄISCHE PATENTANMELDUNG

(21) Anmeldenummer: 89117504.4

(22) Anmeldetag: 22.09.89

(51) Int. Cl.5: C08L 51/08, C08L 51/00, C08F 283/08

(30) Priorität: 06.10.88 DE 3833956

(43) Veröffentlichungstag der Anmeldung: 11.04.90 Patentblatt 90/15

(84) Benannte Vertragsstaaten: BE DE FR GB IT NL

(71) Anmelder: BASF Aktiengesellschaft
Carl-Bosch-Strasse 38
D-6700 Ludwigshafen(DE)

(72) Erfinder: Ostermayer, Bertram, Dr.
Zeppelinstrasse 179
D-6900 Heidelberg(DE)
Erfinder: Taubitz, Christof, Dr.
In der Dreispitz 15
D-6706 Wachenheim(DE)
Erfinder: Muehlbach, Klaus, Dr.
Dr.-Heinrich-Winter-Strasse 19
D-6148 Heppenheim(DE)
Erfinder: Brandt, Hermann, Dr.
Keltenstrasse 30
D-6707 Schifferstadt(DE)

## (54) Verfahren zur Herstellung von thermoplastischen Formmassen auf Basis von modifizierten Polyphenylenether und gepfropftem schlagzähem Polystyrol.

(57) Die Erfindung betrifft ein Verfahren zur Herstellung von thermoplastischen Formmassen durch Mischen von

A) Polyphenylenether, der in weitgehend geschmolzenem Zustand mit einem amidgruppenhaltigen Monomeren mit einer polymerisierbaren Doppelbindung $a_1$, einem lactamgruppenhaltigen Monomeren mit einer polymerisierbaren Doppelbindung $a_2$ oder einer $\alpha,\beta$-ungesättigten Dicarbonylverbindung $a_{23}$ modifiziert ist und

B) schlagzähem Polystyrol, das in weitgehend geschmolzenem Zustand mit einem amidgruppenhaltigen Monomeren mit einer polymerisierbaren Doppelbindung $b_{21}$, einem lactamgruppenhaltigen Monomeren mit einer polymerisierbaren Doppelbindung $b_{22}$ oder einer $\alpha,\beta$-ungesättigten Dicarbonylverbindung $b_{23}$ gepfropft ist, das dadurch gekennzeichnet ist, daß man zunächst die Modifizierung des Polyphenylenethers und die Pfropfung des schlagzähen Polystyrols getrennt voneinander durchführt und anschließend die beiden Komponenten A und B mischt.

EP 0 362 636 A2

# Verfahren zur Herstellung von thermoplastischen Formmassen auf Basis von modifiziertem Polyphenylenether und gepfropftem schlagzähem Polystyrol

Die Erfindung betrifft thermoplastischen Formmassen durch Mischen von

A) Polyphenylenether, der in weitgehend geschmolzenem Zustand mit einem amidgruppenhaltigen Monomeren mit einer polymerisierbaren Doppelbindung $a_{21}$, einem lactamgruppenhaltigen Monomeren mit einer polymerisierbaren Doppelbindung $a_{22}$ oder einer $\alpha,\beta$-ungesättigten Dicarbonylverbindung $a_{23}$ modifiziert ist und

B) schlagzähem Polystyrol, das in weitgehend geschmolzenem Zustand mit einem amidgruppenhaltigen Monomeren mit einer polymerisierbaren Doppelbindung $b_{21}$, einem lactamgruppenhaltigen Monomeren mit einer polymerisierbaren Doppelbindung $b_{22}$ oder einer $\alpha,\beta$-ungesättigten Dicarbonylverbindung $b_{23}$ gepfropft ist, dadurch gekennzeichnet, daß man zunächst die Modifizierung des Polyphenylenethers und die Pfropfung des schlagzähen Polystyrols getrennt voneinander durchführt und anschließend die beiden Komponenten A und B mischt.

Die Modifizierung von Polyphenylenether mit funktionalisierenden Monomeren wie Maleinimid (DE-A 3 540 119), Fumarsäure (EP-A 223 116), Amiden mit einer polymerisierbaren Doppelbindung (EP-A 226 002) oder polymerisierbaren Lactammonomeren (EP-A 223 115) ist bekannt, wobei die Modifizierung üblicherweise in der Schmelze des Polyphenylenethers vorgenommen wird. Ebenso ist die Pfropfung von schlagzähem Polystyrol (DE-A 3 615 853 und DE-A 3 706 885), die im allgemeinen in der Schmelze des schlagzähen Polystyrols durchgeführt wird, bekannt.

In der EP-A 121 974 wird beschrieben, Polyphenylenether gemeinsam mit Styrolpolymerisaten mit einem Dien oder Dienophil in der Schmelze zu modifizieren, um die Fließeigenschaften von Polyphenylenether/Styrolpolymerisat-Mischungen zu verbessern.

Die mechanischen Eigenschaften solcher Formmassen sind jedoch verbesserungsbedürftig. Insbesondere mangelt es ihnen an einem ausgewogenen Verhältnis von Schlagzähigkeit, Wärmeformbeständigkeit und Spannungsrißbeständigkeit.

Aus WO-A 87/00540 war bekannt, Polyphenylenether, gegebenenfalls gemeinsam mit Styrolpolymerisaten mit funktionalisierenden Monomeren zu modifizieren und in Polyamid einzuarbeiten.

Mischungen aus Polyphenylenether und Styrolpolymerisaten, die in einem Arbeitsgang gemeinsam modifiziert wurden, weisen jedoch die obengenannten Nachteile auf.

Aufgabe der vorliegenden Erfindung war es daher, ein Verfahren bereitzustellen, mit dem thermoplastische Formmassen auf Basis von Polyphenylenether und schlagzähem Polystyrol mit guten mechanischen Eigenschaften und insbesondere einem ausgewogenen Verhältnis von guter Kerbschlagzähigkeit, Wärmeformbeständigkeit und Spannungsrißbeständigkeit herstellbar sind.

Vorteilhafte Ausgestaltungen des Verfahrens sind den Unteransprüchen zu entnehmen.

Erfindungswesentlich ist es, daß die Modifizierung des Polyphenylenethers zur Komponente A und die Pfropfung des schlagzähen Polystyrols zur Komponente B getrennt durchgeführt werden, bevor A und B gegegenenfalls mit bekannten Hilfsstoffen in üblichen Mengen gemischt werden.

A und B und gegebenenfalls die Hilfsstoffe werden zweckmäßigerweise bei Temperaturen im Bereich von 200 bis 320 °C, vorzugsweise 250 bis 300 °C in üblichen Mischvorrichtungen, wie z.B. Knetern, Banburymischern und Einschneckenextrudern, vorzugsweise in einem Zweischneckenextruder gemischt. Um eine möglichst homogene Formmasse zu erhalten, ist eine intensive Durchmischung notwendig, was in bekannter Weise erreicht werden kann. Die mittleren Verweilzeiten beim Mischen liegen im allgemeinen im Bereich von 0,5 bis 30 min, vorzugsweise von 1 bis 15 min.

Zur Herstellung A wird Polyphenylenether, dem gegebenenfalls geringe Mengen von vinylaromatischen Polymeren wie Polystyrol beigemischt sein können, in weitgehend geschmolzenem Zustand, also üblicherweise zwischen 250 und 380 °C, bevorzugt 270 bis 330 °C mit den Komponenten $a_{21}$, $a_{22}$ oder $a_{23}$ und gegebenenfalls weiteren Monomeren $a_3$ umgesetzt. Die Umsetzung kann in geeigneten Misch- und Kneteinrichtungen, wie Banbury-Mischern, Einschneckenextrudern oder bevorzugt Zweischneckenextrudern erfolgen. Die mittlere Verweilzeit im Mischaggregat beträgt üblicherweise 0,5 bis 30, bevorzugt 1 bis 15 Minuten.

Üblicherweise werden

$a_1$) 70 bis 99,9, bevorzugt 82 bis 99,9 und insbesondere 95 bis 99,5 Gew.%, bezogen auf A, eines Polymeranteils aus mindestens 70, bevorzugt 90 bis 98 Gew.% Polyphenylenether und höchstens 30 Gew.%, bevorzugt 2 bis 10 Gew.% jeweils bezogen auf $a_1$, einem vinylaromatischen Polymeren,

$a_2$) 0,1 bis 10, bevorzugt 0,1 bis 8 und insbesondere 0,5 bis 5 Gew.%, bezogen auf A, $a_{21}$, $a_{22}$ oder $a_{23}$ und

$a_3$) 0 bis 20 Gew.%, bezogen auf A, eines weiteren Comonomeren, das unter den Herstellbedingungen mit $a_1$ reagieren kann, verwendet.

Die für $a_1$ in Frage kommenden Polyphenylenether sind an sich bekannt, sie werden nach üblichen Verfahren aus in ortho-Position durch Alkylgruppen, Alkoxygruppen, Chlor oder Brom disubstituierten Phenolen durch oxidative Kupplung hergestellt (vgl. US-Patent 3 661 848, 3 378 505, 3 306 874, 3 306 875 und 3 639 656). Die Alkyl- oder Alkoxygruppen, die bevorzugt 1 bis 4 C-Atome, aber kein $\alpha$-ständiges tertiäres Wasserstoffatom enthalten, können auch ihrerseits durch Chlor oder Brom substituiert sein. Geeignete Polyphenylenether sind beispielsweise Poly-2,6-diethyl-1,4-phenylenether, Poly-2-methyl-6-ethyl-1,4-phenylenether, Poly-2-methyl-6-propyl-1,4-phenylenether, Poly-2,6-dipropyl-1,4-phenylenether, Poly-2-ethyl-6-propyl-1,4-phenylenether, Poly-2,6-dichlor-1,4-phenylenether und Poly-2,6-dibrom-1,4-phenylenether, oder Copolymere, wie solche, die 2,3,6-Trimethylphenol enthalten, außerdem Polymermischungen. Bevorzugt ist Poly-2,6-dimethyl-1,4-phenylenether. Die in einem solchen Verfahren hergestellten Polyphenylenether weisen im allgemeinen eine relative Viskosität von 0,3 bis 0,8 dl/g, gemessen in 1 gew.%iger Lösung in Chloroform bei 30° C, auf.

Das vinylaromatische Polymer ist vorzugsweise mit dem eingesetzten Polyphenylenether verträglich, d.h. ganz oder weitgehend in diesen Polymeren löslich (vgl. A. Noshay, Block Copolymers, S. 8 bis 10, Academic Press, 1977 und O. Olabisi, Polymer-Polymer Miscibility, 1979, S. 117 bis 189).

Die vinylaromatischen Polymeren weisen im allgemeinen einen Schmelzindex (MFI, 200° C/5 kg, gemessen nach DIN 53 735) von 1 bis 30, insbesondere von 15 bis 25 g/10 min auf.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, $\alpha$-Methylstyrol oder p-Methylstyrol genannt; in untergeordneten Anteilen (vorzugsweise nicht mehr als 20, insbesondere nicht mehr als 8 Gew.%, bezogen auf die Polymeren), können auch Comonomere wie (Meth)acrylnitril oder (Meth)acrylsäureester am Aufbau beteiligt sein. Ein besonders bevorzugtes vinylaromatisches Polymeres ist Polystyrol. Es versteht sich, daß auch Mischungen dieser Polymeren eingesetzt werden können.

Verfahren zur Herstellung solcher vinylaromatischer Polymerer sind an sich bekannt und in der Literatur beschrieben, so daß sich hier nähere Angaben erübrigen. Nur beispielsweise seien hier als geeignete Polymerisationsverfahren die Masse-, Suspensions-, Emulsions- oder Lösungspolymerisation erwähnt.

Als wesentliche Komponente $a_2$ enthält der modifizierte Polyphenylenether A eine der Verbindungen $a_{21}$ bis $a_{23}$. Bevorzugt wird die Komponente $a_{23}$ eingesetzt.

Als Komponente $a_2$ ist ein mindestens eine Amidgruppe enthaltendes Monomeres mit einer polymerisierbaren Doppelbindung ($a_{21}$) geeignet, vorzugsweise ein solches der allgemeinen Formeln I oder II

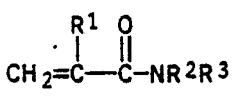

I

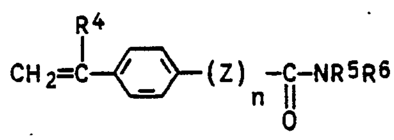

II ,

wobei $R^1$, $R^2$, $R^3$, $R^4$, $R^5$ und $R^6$ Wasserstoff, Alkyl-, Cycloalkyl- oder Arylgruppen mit bis zu 12 C-Atomen und Z Alkylengruppen mit 1 bis 12 C-Atomen und $R^1$ und $R^4$ zusätzlich Alkoxygruppen mit bis zu 12 C-Atomen darstellen und n den Wert 0 oder 1, vorzugsweise 0 hat.

Bevorzugte Substituenten $R^1$, $R^2$, $R^3$, $R^4$, $R^5$ und $R^6$ sind Wasserstoff, Alkylgruppen mit 1 bis 10 C-Atomen, Cycloalkylgruppen mit bis zu 8 C-Atomen oder Arylgruppen, z.B. Phenyl. $R^1$ und $R^4$ sind insbesondere H oder Methyl.

Beispielhaft seien hier Acrylamid, N-Methyl-, N-Ethyl-, N-Propyl-, N-Butyl-, N-Pentyl-, N-Hexyl-, N-Heptyl-, N-Octyl-, N-Nonyl-, N-(2-ethylhexyl)-acrylamid, N-Cyclohexylacrylamid, N-Phenylacrylamid, die entsprechenden N,N-Derivate wie N,N-Dimethylacrylamid und die entsprechenden Methacrylamide sowie deren Mischungen genannt. Bevorzugt werden Acrylamid, Methacrylamid, N-Phenylacrylamid und N-Phenylmethacrylamid verwendet.

Als Komponente $a_2$ kann auch ein eine Lactam-Gruppe enthaltendes Monomer mit einer polymerisierbaren Doppelbindung ($a_{22}$) eingesetzt werden. Vorzugsweise werden Lactame der allgemeinen Struktur III

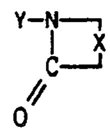

III

eingesetzt, wobei X eine lineare oder verzweigte Alkylengruppe mit 2 bis 15 C-Atomen darstellt und Y die allgemeine Formel

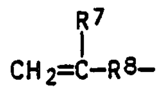

hat, wobei $R^7$ ein Wasserstoffatom, eine Alkyl- oder Alkoxygruppe mit 1 bis 4 C-Atomen und $R^8$ einen zweibindigen Substituenten

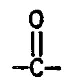

,

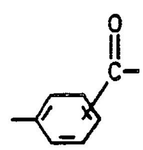

oder

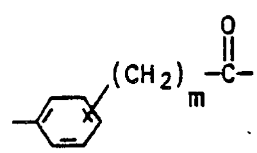

,

wobei m eine ganze Zahl von 1 bis 4 ist, darstellen.

Bevorzugte Substituenten Y sind ganz allgemein Vinyl-, Acryloyl-, Methacryloyl- oder Reste mit Styrol-Grundstrukturen, insbesondere der Acryloyl- oder Methacryloylrest.

Bevorzugt sind Lactameinheiten, die zu Polyamiden polymerisierbar oder copolymerisierbar sind, wie dies im Houben-Weyl, Methoden der organ. Chemie, Band XI/2, S. 511 bis 587, (1958) und Band XIV/2, S. 111 bis 131, (1963) beschrieben wird. Beispielsweise seien β-Propiolactame wie 3,3′-Dimethyl-3-propiolactam, genannt. Ebenfalls bevorzugte Lactam- Einheiten sind Pyrrolidon und ε-Caprolactam, außerdem 7-Önantholactam, 8-Capryllactam und 12-Laurinlactam, wie sie bei K. Dachs, Angewandte Chemie, 74, 540 bis 545, (1962) beschrieben werden. Es können auch Mischungen dieser Verbindungen eingesetzt werden.

Als besonders bevorzugtes Beispiel einer Komponente $a_{22}$ sei hier nur N-(Meth)acryloyl-ε-caprolactam

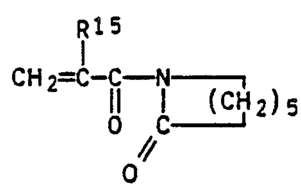

genannt,
wobei $R^{15}$ ein Wasserstoffatom oder eine Methylgruppe sein kann.

Bei der Komponente $a_{23}$ handelt es sich im allgemeinen um eine α,β-ungesättigte Dicarbonsäure, deren Monoester, Diester, Amid, Diamid, Imid oder Anhydrid, bevorzugt eine Verbindung der allgemeinen Formel IV

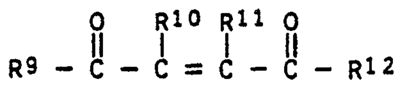

IV,

wobei

$R^9$ und $R^{12}$ Hydroxylgruppen, Aroxy-, Alkoxy-, Aralkoxy- oder Cycloalkoxygruppen mit bis zu 12 C-Atomen, $-NR^{13}R^{14}$ oder gemeinsam $-NR^{13}-$ oder -O-,

$R^{10}$ Wasserstoff, gemeinsam mit $R^{11}$ eine Alkylengruppe mit 4 C-Atomen oder, wenn $R^{11}$ Wasserstoff ist, eine Alkyl-, Alkoxy- oder Cycloalkylgruppe mit bis zu 12 C-Atomen, eine Arylgruppe,

$R^{11}$ Wasserstoff, gemeinsam mit $R^{10}$ eine Alkylengruppe mit 4 C-Atomen oder, wenn $R^{10}$ Wasserstoff ist, eine Alkyl-, Alkoxy- oder Cycloalkylgruppe mit bis zu 12 C-Atomen, eine Arylgruppe,

$R^{13}$ und $R^{14}$ Wasserstoff, Alkyl-, Cycloalkyl-, Aralkyl- oder Arylgruppen mit bis zu 12 C-Atomen, die ihrerseits durch $C_1$-$C_4$-Alkyl- oder -Alkoxygruppen substituiert sein können, darstellen.

Die Substituenten müssen, was sich allerdings von selbst versteht, so beschaffen sein, daß sie die Modifizierungsreaktion nicht verhindern.

Die Ester, Amide, Diamide, Imide und insbesondere die Dicarbonsäuren werden bevorzugt.

Als Beispiele für Dicarbonsäuren seien Maleinsäure, Fumarsäure, Methylmaleinsäure, Butenylbernsteinsäure und Tetrahydrophthalsäure genannt, von denen Maleinsäure und Fumarsäure besonders bevorzugt werden.

Bevorzugte Imide leiten sich von der Maleinsäure ab. Die Substituenten $R^{10}$, $R^{11}$ und $R^{13}$ sind dabei Wasserstoff, Alkylgruppen mit 1 bis 4 C-Atomen, beispielsweise Methyl-, Ethyl- oder n-, i- oder t-Butyl, Cycloakylgruppen mit bis zu 8 C-Atomen oder Phenylgruppen, die im Falle von $R^{13}$ durch $C_1$-$C_4$-Alkylgruppen substituiert sein können. Nur beispielhaft seien als Maleinimide N-Methylmaleinimid, N-Butylmaleinimid, N-Cyclohexylmaleinimid, N-Phenylmaleinimid, N-(p-Methylphenyl)maleinimid, N-(3,5-Dimethylphenyl)maleinimid, N-Benzylmaleinimid, N-(1-Naphthyl)maleinimid oder deren Mischungen genannt. Von diesen wird N-Phenylmaleinimid besonders bevorzugt.

Bevorzugte Halbester und Halbamide leiten sich von der Maleinsäure ab.

Die Halbester leiten sich bevorzugt von primären und sekundären Monoalkoholen, wie Methanol, Ethanol, n- und i-Propanol, n- und i-Butanol, Pentanol, Hexanol, Heptanol, Octanol, z.B. 2-Ethylhexylalkohol und von höheren Alkoholen wie Dodecanol und cycloaliphatischen Alkoholen, z.B. Cyclohexanol ab. Weiter eignen sich auch Alkohole mit aromatischen Struktureinheiten wie z.B. Benzylalkohol. Bevorzugt werden jedoch Alkanole mit 1 bis 6 C-Atomen. Als Amine zur Herstellung der erfindungsgemäß eingesetzten Halbamide seien ganz allgemein sekundäre Amine und N-Alkylaniline genannt. Beispiele hierfür sind N-Methyl- oder N-Ethylalkylamine oder N-Methylanilin. Ganz allgemein werden Halbester den Halbamiden vorgezogen.

Daneben können auch Anhydride wie Maleinsäureanhydrid verwendet werden.

Als $a_3$ kommen weitere Comonomere in Frage, die unter den Herstellungsbedingungen mit der Komponente $a_1$ reagieren bzw. auf $a_1$ aufpfropfen können. Beispielsweise seien hier Styrol, Acrylsäure, Methacrylsäure, Acrylate und Methacrylate genannt. Bevorzugt werden jedoch Formmassen, bei deren Herstellung keine dieser weiteren Comonomeren verwendet wurden.

Bei der Herstellung der modifizierten Polyphenylenether A können bis zu 20 Gew.%, bezogen auf A, an Radikalstartern eingesetzt werden.

Der Anteil der Radikalstarter ist in der Regel geringer als die Summe der verwendeten monomeren Verbindungen $a_2$. Im allgemeinen handelt es sich dabei um ein organisches Peroxid oder eine Azo-Verbindung. Verwendet werden können organische Peroxide mit einer Halbwertzeit im Bereich von 0,1 bis 3000 s bei 200 °C. Die Wahl des Radikalstarters richtet sich nach der gewünschten Reaktionstemperatur. Beispielsweise seien als Radikalstarter tert.-Butylperoxid und Dicumylperoxid genannt.

Häufig, insbesondere bei Temperaturen über 270 °C, hat es sich als vorteilhaft erwiesen, ohne Zugabe von Radikalstartern, d.h. in Abwesenheit von Radikalstartern zu arbeiten. Dies gilt insbesondere dann, wenn als Komponente $a_2$ Fumarsäure eingesetzt wird, da hier bei der Verwendung von Radikalstartern unter Umständen unerwünschte Nebenreaktionen auftreten können.

Die Komponente A wird bei dem erfindungsgemäßen Verfahren üblicherweise in Mengen von 5 bis 95, bevorzugt 20 bis 85 und insbesondere 30 bis 65 Gew.%, bezogen auf die Summe von A und B, eingesetzt.

Zur Herstellung von B wird schlagzähes Polystyrol $b_1$ in weitgehend geschmolzenem Zustand, also üblicherweise zwischen 120 und 280, bevorzugt 140 und 240 °C, mit $b_2$ umgesetzt. Die Umsetzung kann in geeigneten Misch- und Kneteinrichtungen wie Banbury-Mischern, Brabendermischern, Einschneckenextrudern oder bevorzugt Zweischneckenextrudern erfolgen. Die mittlere Verweilzeit im Mischaggregat beträgt

üblicherweise 0,5 bis 20, bevorzugt 1 bis 7 Minuten. Das schlagzähe Polystyrol $b_1$ wird üblicherweise in Mengen von 90 bis 99,9, bevorzugt 95 bis 99,5 Gew.%, bezogen auf B, und die Komponente $b_2$ üblicherweise in Mengen zwischen 0,1 und 10, bevorzugt 0,5 bis 5 Gew.% bezogen auf B, verwendet.

Das schlagzähe Polystyrol $b_1$ ist allgemein bekannt, z.B. aus Ullmanns Encyklopädie der technischen Chemie, 4. Auflage, Band 19, 1980, Seite 265 ff.

Bevorzugt wird das im folgenden beschriebene schlagzähe Polystyrol verwendet. Dieses wird hergestellt aus üblicherweise 80 bis 97 Gew.% mindestens eines vinylaromatischen Monomeren mit 8 bis 12 C-Atomen und aus üblicherweise 3 bis 20 Gew.% eines Elastomeren e.

Das vinylaromatische Monomer ist bevorzugt ausgewählt aus der Gruppe Styrol, α-Methylstyrol und/oder p-Methylstyrol. In untergeordneten Mengen können auch noch Comonomere, wie (Meth)acrylate oder (Meth)acrylsäure miteingesetzt werden, im allgemeinen fehlen die Comonomeren. Besonders bevorzugt wird Styrol alleine verwendet.

Das Elastomere e ist im allgemeinen Polyisopren-Kautschuk, Acrylnitril-Butadien-Kautschuk, Ethylen-Propylen-Kautschuk und Polyacrylat-Kautschuk. Bevorzugt werden Polybutadien-Styrol-Butadien- und Styrol-Butadien-Block-Kautschuke, wobei der Blockkautschuk in der dem Fachmann bekannten Form vorliegen kann, wie scharf getrennte oder verschmierte Blöcke, AB, ABA, ABA′, ABAB, ABC, sternförmig usw. (s. auch Winnacker-Küchler, "Chemische Technologie", Bd. 6, S. 373). Die olefinischen Doppelbindungen können teilweise oder vollständig hydriert sein. Von den Blockkautschuken werden insbesondere die linearen Zweiblockcopolymerisate mit 15 bis 75 Gew.% Blockstyrolgehalt und 85 bis 25 Gew.% Butadien angewendet. Diese weisen mittlere Molekulargewichte (Gewichtsmittel) im Bereich von 10 000 bis 2 Mio, vorzugsweise von 50 000 bis 200 000 auf.

Bevorzugt wird anstelle oder in Abmischung mit den genannten Zweiblock-Copolymerisaten Polybutadien mit Molekulargewichten im Bereich von 50 000 bis 450 000 (Gewichtsmittel) vom Typ der medium oder high-cis Typen angewendet.

Das schlagzähe Polystyrol wird in bekannter Weise hergestellt durch Polymerisation der vinylaromatischen Monomeren in Gegenwart des Elastomeren e.

Bei der bevorzugten Arbeitsweise wird im allgemeinen das Elastomere e in dem monomeren vinylaromatischen Monomeren (Styrol) gelöst und diese Ausgangslösung dann entweder in Masse, Lösung oder nach einem kombinierten Masse-Suspension-Verfahren kontinuierlich oder diskontinuierlich polymerisiert. Die zu polymerisierende Lösung des Elastomeren in dem Monomeren Styrol trennt sich dabei nach Einsetzen der Polymerisationsreaktion in zwei Phasen, von denen die eine, eine Lösung des Elastomeren im monomeren Styrol, zunächst die kohärente Phase bildet, während die zweite, eine Lösung des gebildetem Polystyrols in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf, sobald die Menge an gebildetem Polystyrol die Menge an eingesetztem Kautschuk übersteigt. Bei dieser Phaseninversion bilden sich Tropfen von Kautschuk-Lösung in der Polystyrol-Lösung aus; diese Tropfen halten aber ihrerseits kleinere Tröpfchen der jetzt äußeren Phase des Polystyrols fest eingeschlossen. Gleichzeitig findet bei dieser Polymerisation eine Pfropfung des Kautschuks durch Polystyrolketten statt.

Die Polymerisation erfolgt dabei in aller Regel in mehreren Stufen, wobei in der ersten Polymerisationsstufe, während der sogenannten Vorpolymerisation, die styrolische Kautschuklösung unter Scherung bis zu einem Umsatz jenseits des Phaseninversionspunktes polymerisiert und anschließend bei verminderter oder ganz ohne Scherung bis zu dem gewünschten Styrol-Umsatz auspolymerisiert wird. Die kontinuierliche Masse- oder Lösungspolymerisation ist beispielsweise in den US-Patentschriften 26 94 692 und 32 43 481 oder der DE-A 17 70 392 beschrieben. Die diskontinuierliche Verfahrensweise der kombinierten Masse-Suspensionspolymerisation ist z.B. aus der DE-A 15 95 230 bekannt.

Als Komponente $b_2$ kommt ein amidgruppenhaltiges Monomeres mit einer polymerisierbaren Doppelbindung ($b_{21}$), ein lactamgruppenhaltiges Monomeres mit einer polymerisierbaren Doppelbindung ($b_{22}$) oder eine α,β-ungesättigte Dicarbonylverbindung ($b_{23}$) in Frage. Bevorzugt wird $b_{23}$). Die Komponenten $b_{21}$, $b_{22}$ und $b_{23}$ sind Verbindungen, wie sie bereits bei den Komponeten $a_{21}$, $a_{22}$ und $a_{23}$ eingehend beschrieben wurden, so daß sich hier weitere Erläuterungen erübrigen. Für nähere Einzelheiten sei auf die Ausführungen zu den Komponenten $a_{21}$, $a_{22}$ und $a_{23}$ verwiesen.

Die Komponente B wird in dem erfindungsgemäßen Verfahren in Mengen von üblicherweise 5 bis 95, bevorzugt 15 bis 80 und insbesondere 35 bis 70 Gew.%, bezogen auf die Summe von A und B, verwendet.

In dem erfindungsgemäßen Verfahren können den Komponeten A und B auch übliche Hilfsstoffe in bekannten Mengen zugegeben werden.

In Frage kommen übliche Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Kohlenstoff-Fasern, aromatische Polyamidfasern und bevorzugt Glasfasern, Füllstoffe wie Gipsfasern, synthetische Calciumsilikate, Kaolin, calciniertes Kaolin, Wollastonit, Talkum, Kreide und/oder Flammschutzmittel wie Triphenylphosphat oder Triphenylphosphinoxid. Diese Zusätze werden in dem Fachmann bekannten Mengen, üblicherweise in Mengen von 0,1 bis 40, vorzugsweise 0,5 bis 20 Gew.-Teilen, bezogen auf 100 Gew.-Teile der Summe aus A und B, eingesetzt.

Ebenfalls in Frage kommen übliche polymere Zusätze wie nicht modifizierter Polyphenylenether oder von B verschiedene vinylaromatische Polymerisate, wie sie bereits bei der Komponente $a_1$ beschrieben wurden. Für nähere Einzelheiten sei daher auf die Ausführungen zu Komponente $a_1$ verwiesen.

Die erwähnten, von B verschiedenen vinylaromatischen Polymerisate können auch schlagzäh modifiziert sein.

Dabei werden die vinylaromatischen Polymeren in bekannter Weise in Gegenwart eines Schlagzähmodifiers hergestellt. Als Kautschuke seien beispielsweise Polybutadien-, Styrol-Butadien-, Styrol-b-Butadien-, Acrylnitril-Butadien-, Ethylen-Propylen-, Polyacrylat- und Polyisopren-Kautschuke und als Pfropfkomponente Styrol genannt.

Als übliche polymere Zusätze seien weiter erwähnt styrolgepfropfte Ethylen-Propylen-Kautschuke, thermoplastische Ethylen-Propylen-Kautschuke, thermoplastische Polyester-Elastomere, Ethylenkautschuke und Ionomere, Styrol-Butadien-Blockcopolymere einschließlich AB-, ABA-, ABA-verschmiert (taper)-, ABAB-, ABAB-verschmierte Stern-Block-Copolymere und ähnliche, analoge Isopren-Blockpolymerisate und (teil)-hydrierte Blockcopolymere.

Diese polymeren Zusätze können in dem Fachmann bekannten Mengen zugesetzt werden. Üblicherweise werden nicht mehr als 80, bevorzugt weniger als 30 Gew.-Teile, bezogen auf 100 Gew.-Teile der Summe aus A und B, zugesetzt.

Das erfindungsgemäße Verfahren führt zu Formmassen, die gute mechanische Eigenschaften wie ein ausgewogenes Verhältnis von guter Kerbschlagzähigkeit, hoher Wärmeformbeständigkeit und guter Spannungsrißbeständigkeit aufweisen.

Aus den Formmassen, die in dem erfindungsgemäßen Verfahren herstellbar sind, lassen sich durch Spritzgießen oder Extrusion Formkörper mit vorteilhaften Eigenschaften herstellen.

Beispiele und Vergleichsversuche

Zur Ausführung von Beispielen und Vergleichsversuchen wurden folgende Komponenten verwendet:

Komponente A

A(1): 9,25 kg Poly-2,6-dimethyl-1,4-phenylenether mit einer relativen Viskosität von 0,61 (gemessen in 1 gew.%iger Lösung in $CHCl_3$ bei 30 °C), 0,5 kg Polystyrol (PS 144 C der BASF Aktiengesellschaft mit einem MFI (200 °C/5 kg Last) von 24 g/10 min) und 0,25 kg Fumarsäure wurden in einem Zweischneckenextruder (ZSK 53; Werner & Pfleiderer) dosiert, in einem ersten Teil unter Verwendung von Knetelementen bei 280 °C aufgeschmolzen, in einem zweiten Teil unter Kneten und Verwendung von Knetelementen bei 280 °C umgesetzt und anschließend in einer Entgasungszone bei 280 °C durch Anlegen von Vakuum entgast. Die mittlere Verweilzeit im Extruder betrug 3 min. Die austretende Schmelze wurde durch ein Wasserbad geleitet, granuliert und getrocknet.

A(2): 9,4 kg des in A(1) verwendeten Polyphenylenethers und 0,5 kg des in A(1) verwendeten Polystyrols wurden mit 0,1 kg Fumarsäure wie bei A(1) umgesetzt.

A(3): Poly-2,6-dimethyl-1,4-phenylenether mit einer relativen Viskosität von 0,5 dl/g, unmodifiziert.

B(1): Als unmodifiziertes schlagzähes Polystyrol B(1) wurde das Polystyrol 1 der DE-A 3 615 853 eingesetzt.

B(2): 99,2 Gew.% B(1) und 0,8 Gew.% Fumarsäure wurden in einem Zweischneckenextruder (ZSK 53) der Firma Werner & Pfleiderer dosiert und in einem ersten Teil unter Verwendung von Knetelementen bei 180 °C aufgeschmolzen, anschließend in einem zweiten Teil unter Kneten und Verwendung von zurückfördernden Knetleementen bei 195 °C umgesetzt und anschließend in einer Entgasungszone bei 180 °C durch Anlegen von Vakuum entgast. Die mittlere Verweilzeit im Extruder betrug 4 Min. Die austretende Schmelze wurde durch ein Wasserbad geleitet und granuliert.

B(3): Als unmodifiziertes schlagzähes Polystyrol B(3) wurde das Polystyrol 2 der DE-A 3 615 853 eingesetzt.

B(4): Es wurde eine bei B(2) gearbeitet, jedoch wurden 98 Gew.% B(3) und 2 Gew.% Fumarsäure

und eine Temperatur der Knetelemente von 190 °C verwendet.

Zu Vergleichszwecken wurde weiterhin die folgende Komponente verwendet:

V(1): 5,6 kg A(3), 0,3 kg des in A (1) verwendeten Polystyrols und 3,9 kg B(1) wurden gemischt und die Mischung mit 0,2 kg Fumarsäure wie bei A(1) beschrieben umgesetzt.

Die in der Tabelle angegebenen Komponenten wurden auf einem Zweiwellenextruder im Verlaufe von 3 Minuten bei 280 °C geschmolzen, homogenisiert und gemischt.

Die angegebenen Messungen wurden wie folgt durchgeführt:

- Die Kerbschlagzähigkeit wurde nach DIN 53 453 an bei 280 °C spritzgegossenen Normkleinstäben bei 23 °C gemessen.
- Die Wärmeformbeständigkeit wurde nach Vicat (DIN 53 460/B) bestimmt.
- Die Spannungsrißbeständigkeit wurde nach DIN 53 449 ermittelt.

Verwendet wurden bei 280 °C hergestellte Probekörper, die für die Dauer von 1 Stunde in Isopropanol gelagert wurden.

Tabelle

| Beispiele und Vergleichsversuche | Zusammensetzung der Formmasse | | | | | | Eigenschaften | | | |
|---|---|---|---|---|---|---|---|---|---|---|
| | A | | B | | V | | Kerbschlagzähigkeit [kJ/m²] | Vicat/B [°C] | Rißgrenze Biegefestigkeit | $U_R$ Reißdehnung |
| | Art | Menge | Art | Menge | Art | Menge | | | | |
| 1 | A(1) | 35 | B(2) | 65 | - | - | 13 | 125 | >500 | >500 |
| 1* | A(3) | 33 | B(2) | 67 | - | - | 8 | 117 | 130 | 115 |
| 2 | A(1) | 42 | B(2) | 58 | - | - | 15 | 133 | >500 | >500 |
| 2* | A(1) | 42 | B(1) | 58 | - | - | 9 | 122 | >150 | >120 |
| 3 | A(1) | 40 | B(4) | 60 | - | - | 14 | 131 | >500 | >500 |
| 3* | A(3) | 38 | B(3) | 62 | - | - | 10 | 128 | 250 | 220 |
| 4 | A(2) | 60 | B(4) | 40 | - | - | 20 | 150 | >500 | >500 |
| 5 | A(2) | 45 | B(2) | 55 | - | - | 15 | 136 | >500 | >500 |
| 6* | - | - | - | - | V(1) | 100 | 15 | 148 | 320 | 310 |

*) nicht erfindungsgemäß

## Ansprüche

1. Verfahren zur Herstellung von thermoplastischen Formmassen durch Mischen von
A) Polyphenylenether, der in weitgehend geschmolzenem Zustand mit einem amidgruppenhaltigen Monomeren mit einer polymerisierbaren Doppelbindung $a_{21}$, einem lactamgruppenhaltigen Monomeren mit einer polymerisierbaren Doppelbindung $a_{22}$ oder einer α,β-ungesättigten Dicarbonylverbindung $a_{23}$ modifiziert ist und
B) schlagzähem Polystyrol, das in weitgehend geschmolzenem Zustand mit einem amidgruppenhaltigen Monomeren mit einer polymerisierbaren Doppelbindung $b_{21}$, einem lactamgruppenhaltigen Monomeren mit einer polymerisierbaren Doppelbindung $b_{22}$ oder einer α,β-ungesättigten Dicarbonylverbindung $b_{23}$ gepfropft ist,
dadurch gekennzeichnet, daß man zunächst die Modifizierung des Polyphenylenethers und die Pfropfung des schlagzähen Polystyrols getrennt voneinander durchführt und anschließend die beiden Komponenten A und B mischt.

2. Verfahren nach Anspruch 1, dadurch gekennzeichnet, daß der modifizierte Polyphenylenether A durch Umsetzen von
$a_1$) 70 bis 99,9 Gew.%, bezogen auf A, eines Polymeranteils, der mindestens 70 Gew.%, bezogen auf $a_1$, Polyphenylenether und höchstens 30 Gew.%, bezogen auf $a_1$, eines vinylaromatischen Polymeren enthält,
$a_2$) 0,1 bis 10 Gew.%, bezogen auf A,
$a_{21}$) eines amidgruppenhaltigen Monomeren mit einer polymerisierbaren Doppelbindung,
$a_{22}$) eines lactamgruppenhaltigen Monomeren mit einer polymerisierbaren Doppelbindung oder
$a_{23}$) einer α,β-ungesättigten Dicarbonylverbindung und
$a_3$) 0 bis 20 Gew.%, bezogen auf A, eines weiteren Comonomeren, das unter den Herstellbedingungen mit $a_1$ reagieren kann,
in der Schmelze hergestellt ist.

3. Verfahren nach mindestens einem der Ansprüche 1 oder 2, dadurch gekennzeichnet, daß die Komponente B erhalten wird durch Umsetzung in der Schmelze von
$b_1$) 90 bis 99, 9 Gew.% bezogen auf B, eines schlagzähen Polystyrols mit
$b_2$) 0,1 bis 10 Gew.% bezogen auf B,
$b_{21}$) einem amidgruppenhaltigen Monomeren mit einer polymerisierbaren Doppelbindung,
$b_{22}$) einem lactamgruppenhaltigen Monomeren mit einer polymerisierbaren Doppelbindung, oder
$b_{23}$) einer α,β-ungesättigten Dicarbonylverbindung.

4. Verfahren nach mindestens einem der Ansprüche 1 bis 3, dadurch gekennzeichnet, daß $a_{21}$ und/oder $b_{21}$ eine Verbindung der allgemeinen Formel I oder II ist

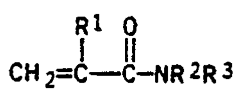
I

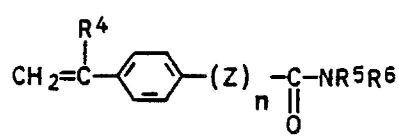
II ,

wobei $R^1$, $R^2$, $R^3$, $R^4$, $R^5$ und $R^6$ Wasserstoff, Alkyl-, Cycloalkyl- oder Arylgruppen und Z Alkylengruppen mit bis zu 12 C-Atomen und $R^1$ und $R^4$ zusätzlich Alkoxygruppen mit bis zu 12 C-Atomen darstellen und n den Wert 0 oder 1 hat.

5. Verfahren nach mindestens einem der Ansprüche 1 bis 4, dadurch gekennzeichnet, daß $a_{22}$ und/oder $b_{22}$ eine Verbindung der allgemeinen Formel III ist

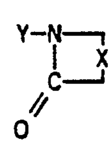
III

wobei x eine lineare oder verzweigte Alkylengruppe mit 2 bis 15 C-Atomen darstellt und Y die allgemeine

Formel

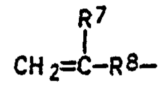

hat, wobei $R^7$ Wasserstoff, eine Alkyl- oder Alkoxygruppe mit 1 bis 4 C-Atomen und $R^8$ einen der nachstehenden zweiwertigen Reste

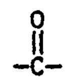 ,

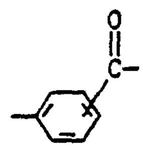 oder

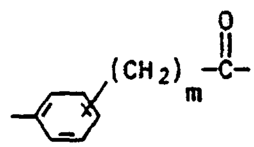 ,

wobei m eine ganze Zahl von 1 bis 4 ist, darstellen.

6. Verfahren nach mindestens einem der Ansprüche 1 bis 5, dadurch gekennzeichnet, daß $a_{23}$ und/oder $b_{23}$ eine Verbindung der allgemeinen Formel IV ist

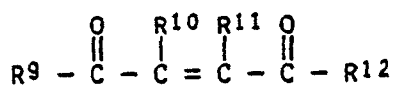 IV

wobei
$R^9$ und $R^{12}$ Hydroxylgruppen, Aroxy-, Alkoxy-, Aralkoxy- oder Cycloalkoxygruppen mit bis zu 12 C-Atomen, $-NR^{13}R^{14}$ oder gemeinsam $-NR^{13}-$ oder -O-,
$R^{10}$ und $R^{11}$ Wasserstoff oder, wenn $R^{11}$ oder $R^{10}$ Wasserstoff ist, eine Alkyl-, Alkoxy- oder Cycloalkylgruppe mit bis zu 12 C-Atomen, eine Arylgruppe oder gemeinsam eine Alkylengruppe mit 4 C-Atomen,
$R^{13}$ und $R^{14}$ Wasserstoff, Alkyl-, Cycloalkyl-, Aralkyl- oder Arylgruppen mit bis zu 12 C-Atomen, die ihrerseits durch $C_1$-$C_4$-Alkyl- oder -Alkoxygruppen substituiert sein können, darstellen.